# EUROPÄISCHE PATENTSCHRIFT

(11) **EP 4 414 339 B1**
(45) Veröffentlichungstag und Bekanntmachung des Hinweises auf die Patenterteilung: **13.08.2025**
(21) Anmeldenummer: 24152100.4
(22) Anmeldetag: 16.01.2024
(51) Int. Cl.: C04B 28/02, C04B 28/04, C04B 28/08, C04B 111/80

(54) **WEISSZEMENTMISCHUNG, VERFAHREN ZUR HERSTELLUNG DER WEISSZEMENTMISCHUNG, ERHÄRTETE WEISSZEMENTMISCHUNG, TROCKENBETONMISCHUNG, TROCKENMÖRTELMISCHUNG, FRISCHBETONMASSE UND FRISCHMÖRTELMASSE JEWEILS MIT DER WEISSZEMENTMISCHUNG**
WHITE CEMENT MIXTURE, METHOD FOR PRODUCING WHITE CEMENT MIXTURE, CURED WHITE CEMENT MIXTURE, DRY CONCRETE MIXTURE, DRY MORTAR MIXTURE, FRESH CONCRETE MASS AND FRESH MORTAR MASS EACH COMPRISING THE WHITE CEMENT MIXTURE
MÉLANGE DE CIMENT BLANC, PROCÉDÉ DE FABRICATION DU MÉLANGE DE CIMENT BLANC, MÉLANGE DE CIMENT BLANC DURCI, MÉLANGE DE BÉTON SEC, MÉLANGE DE BÉTON FRAIS ET MÉLANGE DE MORTIER BLANC CHACUN

(30) Priorität: 19.01.2023 DE 102023200414
(43) Veröffentlichungstag der Anmeldung: 14.08.2024
(73) Patentinhaber: Dyckerhoff GmbH, 65203 Wiesbaden (DE)
(72) Erfinder: Canonico, Fulvio, Wiesbaden (DE); Mutke, Sabine, Wiesbaden (DE); Irico, Sara, Wiesbaden (DE); Bechtoldt, Christian, Wiesbaden (DE)
(74) Vertreter: Dr. Solf & Zapf Patent- und Rechtsanwalts PartG mbB

(56) Entgegenhaltungen:
- EP-B1- 1 373 159
- WO-A1-2006/100531
- CN-B- 101 367 626
- DE-A1- 102005 050 026
- US-A- 6 033 468
- US-A1- 2003 047 119
- US-A1- 2018 230 057

## Beschreibung

Die vorliegende Erfindung betrifft eine trockene, schüttfähige Weißzementmischung, ein Verfahren zur Herstellung der Weißzementmischung, sowie eine Trockenbetonmischung, eine Trockenmörtelmischung, eine Frischbetonmasse und eine Frischmörtelmasse jeweils enthaltend die Weißzementmischung und eine erhärtete Weißzementmischung.

Zement ist bekanntermaßen ein hydraulisches, anorganisches Bindemittel, welches durch die chemische Reaktion mit Wasser erstarrt und erhärtet (Hydratation) und nach dem Erhärten auch unter Wasser beständig bleibt. Zement ist feingemahlen bzw. mehlförmig. Es handelt sich um ein Schüttgut.

Unter mehlförmig wird im Rahmen der Erfindung eine Korngröße ≤ 200 µm verstanden.

Sofern nicht anders angegeben, erfolgt zudem die Bestimmung von Korngrößen im Rahmen der Erfindung mittels Laserlichtbeugung gemäß ISO 13320:2020-01.

Zemente werden nach ihrer Zusammensetzung gemäß der DIN 197-1:2011-11 und der DIN 197-5:2021-07 in unterschiedliche Zementarten bzw. Normalzemente CEM I-VI eingeteilt. Die unterschiedlichen Zementarten enthalten alle mindestens 95 M.-% Hauptbestandteile und höchstens 5 M.-% Nebenbestandteile, bezogen auf die Summe an Haupt- und Nebenbestandteilen. Bei den Hauptbestandteilen handelt es sich neben Portlandzementklinker (K) um Hüttensand (S), Silicastaub (D), natürliche Puzzolane (P), natürliche getemperte Puzzolane (Q), kieselsäurereiche Flugasche (V), kalkreiche Flugasche (W), gebrannten Schiefer (T), Kalkstein (L oder LL). Ein Hauptbestandteil muss mit mindestens 5 M.-% bezogen auf die Summe an Haupt- und Nebenbestandteilen enthalten sein.

Portlandzementklinker besteht bekanntermaßen im Wesentlichen aus den vier Klinkerphasen Tricalciumsilikat (Alit) C₃S, Dicalciumsilikat (Belit) C₂S, Tricalciumaluminat C₃A und Tetracalciumaluminatferrit C₄AF. Zudem kann Portlandzementklinker freies CaO (Calciumoxid) aufweisen. Die Klinkerphasen reagieren bei der Hydratation bekanntermaßen hauptsächlich zu Calciumsilikathydraphasen (CSH-Phasen). Bei der Hydratation von C₃S und C₂S bildet sich zudem bekanntermaßen Portlandit (Calciumhydroxid (Ca(OH)₂)).

Puzzolane sind gemäß DIN 197-1:2011-11 natürliche Stoffe mit kieselsäurehaltiger oder alumosilikatischer Zusammensetzung oder eine Kombination davon.

Puzzolane erhärten nach dem Anmachen mit Wasser nicht selbständig, sondern reagieren, fein gemahlen und in Gegenwart von Wasser, bei normaler Umgebungstemperatur mit dem gelösten Calciumhydroxid (Ca(OH)₂) unter Entstehung von festigkeitsbildenden Calciumsilikat- und Calciumaluminatverbindungen.

Puzzolane enthalten reaktionsfähiges Siliciumdioxid (SiO₂) und ggf. Aluminiumoxid (Al₂O₃) und inerte Minerale, die mehr oder weniger eisenhaltig sein können. Der Anteil von reaktionsfähigem Calciumoxid (CaO) ist in Puzzolanen gering. Der Massenanteil an reaktionsfähigem Siliciumdioxid (SiO₂) muss normgemäß mindestens 25,0 M.-% betragen.

Natürliche Puzzolane (P) sind im Allgemeinen Stoffe vulkanischen Ursprungs oder Sedimentgestein mit geeigneter chemisch-mineralogischer Zusammensetzung und müssen den Anforderungen gemäß 5.2.3.1 der DIN 197-1:2011-11 entsprechen.

Natürliche getemperte Puzzolane (Q) sind thermisch aktivierte Stoffe vulkanischen Ursprungs, Tone, Schiefer oder Sedimentgestein und müssen den Anforderungen gemäß 5.2.3.1 der DIN 197-1:2011-11 entsprechen.

Bei den Nebenbestandteilen handelt es sich um besonders ausgewählte, anorganische natürliche mineralische Stoffe, anorganische mineralische Stoffe, die aus der Klinkerherstellung stammen, oder Bestandteile wie in 5.2 der DIN 197-1:2011-11 beschrieben, es sei denn, sie sind bereits als Hauptbestandteile im Zement enthalten.

Zement enthält zudem zusätzlich zu den Haupt- und Nebenbestandteilen Calciumsulfat zur Regelung des Erstarrungsverhaltens. Calciumsulfat kann in Form von Gips, Halbhydrat oder Anhydrit oder einer Mischung davon enthalten sein. Der Anteil an Calciumsulfatträger wird auf die Summe an Haupt- und Nebenbestandteilen bezogen.

Weißzement gehört zur Gruppe der Portlandzemente (CEM I) und zeichnet sich durch seinen geringen Eisenoxidgehalt aus. Weißzementklinker ist somit ein weißer Portlandzementklinker ohne nennenswerte Anteile an der Klinkerphase Tetracalciumaluminatferrit C₄AF. Insbesondere hat Weißzementklinker einen geringen Anteil an dreiwertigem Eisen (Fe³⁺), da dieses dem Weißzementklinker einen Gelbstich verleihen würde. Weißzementklinker wird deshalb aus sehr eisenarmen Rohstoffen wie beispielsweise Kalkstein, Kaolin und Quarz sowie unter Zugabe genau definierter Gemische aus Gipsen und Anhydriten in einem aufwendigen Brennverfahren hergestellt. Möglichst wird reduzierend gebrannt. Zudem muss der Weißzementklinker nach dem Brennen schnell und unter Sauerstoffabschluss auf <600 °C gekühlt werden, um eine Nachoxidation des zweiwertigen zum dreiwertigen Eisen zu vermeiden. Das Abkühlen geschieht in der Regel mit Wasser, weshalb Weißzementklinker einen höheren Ca(OH)₂ Gehalt als Grauzementklinker aufweist. Der Gehalt an gebildetem Ca(OH)₂ ist von der Art und Dauer der Wasserkühlung abhängig.

Auch aus diesem Grund können bei aus den aus Weißzement hergestellten Bauteilen Kalkausblühungen auftreten.

Weißzement unterscheidet sich von Grauzement zudem durch seine weiße Farbe. Die Farbmessung erfolgt dabei beispielsweise im L*a*b*-Farbraum (auch: CIELAB, CIEL*a*b*, Lab-Farben) gemäß DIN EN ISO/CIE 11664-4:2020-03. Weißzement weist einen Helligkeitswert L* von ≥ 80 auf. Im Gegensatz dazu weist Grauzement einen Helligkeitswert L* von 58-72 auf.

Weißzement weist zudem eine Gelbtönung b* von ≤ 4,0, insbesondere ≤ 3,5, auf. Im Gegensatz dazu weist Grauzement eine Gelbtönung b* von 6-10 auf.

Jede Farbe im L*a*b*-Farbraum ist durch einen Farbort mit den kartesischen Koordinaten {L*, a*, b*} definiert. Die L*-Achse beschreibt die Helligkeit (Luminanz) der Farbe mit Werten von 0 bis 100. Sie kann auch als Neutralgrauachse bezeichnet werden, denn zwischen den Endpunkten Schwarz (L*=0) und Weiß (L*=100) sind alle unbunten Farben (Grautöne) enthalten. Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen (https://de.wikipedia.org/wiki/Lab-Farbraum).

Die US 6,033,468 offenbart eine durch Verbundmahlung hergestellte Weißzementmischung. Die Weißzementmischung weist dabei 5-20 M.-% wasserfreies Alumosilikat (2 SiO₂-Al₂O₃), 3-7 M.-% Gips und 73-92 M.-% Weißzementklinker auf. Nach einer weiteren Ausführungsform weist die Weißzementmischung 5-20 M.-% wasserfreies Alumosilikat (2 SiO₂-Al₂O₃) und Kieselgur (Diatomeenerde), 3-7 M.-% Gips und 73-92 M.-% Weißzementklinker auf. Und nach einer weiteren Ausführungsform weist die Weißzementmischung 5-20 M.-% wasserfreies Alumosilikat (2 SiO₂-Al₂O₃), Diatomeenerde und ein weiteres natürliches Puzzolan, 3-7 M.-% Gips und 73-92 M.-% Weißzementklinker auf. Die Weißzementmischung weist dabei eine Reflexion ≥ 80, vorzugsweise ≥ 87,5, auf einem R_{d} Maßstab, gemessen mit einem Hunter Lab Farbmessgerät, auf.

Bei der Herstellung der Weißzementmischung werden die einzelnen Komponenten miteinander vermahlen. Zudem wird zur Qualitätskontrolle die Farbe der Weißzementmischung und auch der einzelnen Komponenten gemessen.

Weißzement bzw. Weißzementmischungen werden bekanntermaßen hauptsächlich für Terrazzo, Bauteile aus Sichtbeton und weißen Putz eingesetzt.

Weißzement bzw. Weißzementmischungen lassen sich zudem mit Farbpigmenten besser einfärben als grauer Portlandzement, da die Farben besser hervortreten. Besonders bei eingefärbten Bauteilen sind die oben beschriebenen Kalkausblühungen unerwünscht.

Sichtbeton ist Festbeton, der nicht verputzt oder verblendet wird und dessen Ansichtsflächen meist gestalterische Funktionen erfüllen.

Festbeton ist ein hydraulisch erhärtetes Gemisch, welches hergestellt wird aus einer frischen Betonmischung bzw. Betonfrischmasse bzw. einem Frischbeton enthaltend hydraulisches Bindemittel, mindestens einen Zuschlagstoff, insbesondere eine Gesteinskörnung, und Anmachwasser. Beton ist unter anderem in der DIN EN 206-1:2013+A2:2021/DIN 1045-2:2008-08 genormt.

Im Gegensatz zum Beton, der zumindest einen groben Zuschlagstoff mit einer Korngröße > 4 mm aufweist, weist der Zuschlagstoff im Mörtel eine Korngröße von höchstens 4 mm auf.

Für die Herstellung von Frischbetonmassen bzw. Frischmörtelmassen werden häufig Trockenbetonmischungen bzw. Trockenmörtelmischungen (Werk-Trockenmörtel bzw. Werkmörtel) verwendet. Hierbei handelt es sich um vorfabrizierte Trockenmischungen, aufweisend zumindest ein mineralisches Bindemittel und zumindest einen Zuschlagstoff, die auf der Baustelle nur noch mit Wasser zu einem Frischbeton bzw. Frischmörtel angerührt werden müssen und damit gebrauchsfertig sind.

Aufgabe der vorliegenden Erfindung ist die Bereitstellung einer kostengünstig herstellbaren, schüttfähigen, trockenen, mehlförmigen Weißzementmischung mit guter Sulfatbeständigkeit, guter Farbqualität und einer geringen Anfälligkeit zu Kalkausblühungen, sowie eines Verfahrens zu deren Herstellung.

Weitere Aufgaben sind die Bereitstellung einer aus der trockenen Weißzementmischung hergestellten hydratisierten Weißzementmischung, einer Trockenbetonmischung, einer Trockenmörtelmischung, einer Frischbetonmasse und einer Frischmörtelmasse jeweils enthaltend die Weißzementmischung.

Diese Aufgabe wird durch eine Weißzementmischung mit den Merkmalen von Anspruch 1, ein Verfahren mit den Merkmalen von Anspruch 16, eine hydratisierte Weißzementmischung mit den Merkmalen von Anspruch 17, eine Trockenmörtelmischung mit den Merkmalen von Anspruch 18, eine Frischmörtelmasse mit den Merkmalen von Anspruch 19, eine Trockenbetonmischung mit den Merkmalen von Anspruch 20 und eine Frischbetonmasse mit den Merkmalen von Anspruch 21 gelöst. Vorteilhafte Weiterbildungen der Erfindung sind in den sich jeweils anschließenden Unteransprüchen gekennzeichnet.

Im Folgenden wird die Erfindung anhand einer Zeichnung beispielhaft näher erläutert. Es zeigen:
- Figur 1:: Ein Reflexionsgraph zweier verschiedener vulkanischer Puzzolane P1 und P2, eines ersten Weißzementtyps (Strong N) und von Mischungen des Weißzements mit den Puzzolanen P1 und P2 (jeweils 70 M.-% Weißzement und 30 M.-% Puzzolan) im Wellenlängenbereich 400-700 nm
- Figur 2:: Ein Reflexionsgraph der beiden vulkanischen Puzzolane, eines zweiten Weißzements (Strong R) und von Mischungen des Weißzements mit den Puzzolanen P1 und P2 (jeweils 70 M.-% Weißzement und 30 M.-% Puzzolan) im Wellenlängenbereich 400-700 nm
- Figur 3:: Ein Reflexionsgraph der beiden vulkanischen Puzzolane, des zweiten Weißzements (Strong R) und von Mischungen des Weißzements mit den Puzzolanen P1 und P2 (jeweils 85 M.-% Weißzement und 15 M.-% Puzzolan) im Wellenlängenbereich 400-700 nm
- Figur 4:: Ein Reflexionsgraph von Prüfkörpern, hergestellt aus reinem Weißzement (Strong R) und aus Weißzementmischungen enthaltend den Weißzement Strong R und das Puzzolan P1 (70 M.-% Weißzement und 30 M.-% Puzzolan) im Wellenlängenbereich 400-700 nm
- Figur 5:: Ein Reflexionsgraph von Prüfkörpern, hergestellt aus reinem Weißzement (Strong N) und aus Weißzementmischungen enthaltend den Weißzement Strong N und die beiden Puzzolan P1 und P2 (jeweils 85 M.-% Weißzement und 15 M.-% Puzzolan) im Wellenlängenbereich 400-700 nm
- Figur 6:: Die Längenänderung von in einer 4,4%igen Na₂SO₄-Lösung bei 20°C gelagerten Flachprismen, hergestellt aus reinem Weißzement (Strong R) und einer Putzmischung mit erfindungsgemäßer Weißzementmischung (Strong R 70 M.-% + Puzzolan P1 30 M.-%)
- Figur 7:: Festigkeitsentwicklung verschiedener Weißzementmischungen mit unterschiedlichem SO₃-Gehalt
- Figur 8:: Anteil von Weißzementklinker, Gips und Puzzolan in den unterschiedlichen Siebfraktionen

Die erfindungsgemäße trockene, hydraulisch erhärtende, mehlförmige Weißzementmischung weist 95-100 M.-% Hauptbestandteile und 0-5 M.-% Nebenbestandteil(e), jeweils bezogen auf die Summe aus Haupt- und Nebenbestandteilen, sowie zusätzlich zu den Haupt- und Nebenbestandteilen zumindest einen Erstarrungsregler auf bzw. besteht daraus.

Analog wie in der DIN 197-1:2011-11 definiert, handelt es sich im Rahmen der Erfindung bei einem Hauptbestandteil um einen anorganischen Stoff, dessen Anteil mehr als 5 % der Gesamtsumme aller Haupt- und Nebenbestandteile beträgt. Ein Nebenbestandteil ist demgemäß ein anorganischer Stoff, dessen Anteil nicht mehr als 5 % der Gesamtsumme aller Haupt- und Nebenbestandteile beträgt. Vorzugsweise handelt es sich um Nebenbestandteile gemäß DIN EN 197-1:2011-11. Die Haupt- und Nebenbestandteile sind aber im Rahmen der Erfindung nicht auf die in der DIN 197-1:2011-11 genannten Stoffe beschränkt.

Erfindungsgemäß weist die Weißzementmischung als Hauptbestandteil auf:
a) Weißzementklinker, vorzugsweise in einer Menge von 45 bis 95 M.-%, bevorzugt 50 bis 85 M.-%, besonders bevorzugt 65 bis 80 M.-%, bezogen auf die Summe aus Haupt- und Nebenbestandteilen,
b) zumindest ein reflektierendes Puzzolan vulkanischen Ursprungs, in einer Gesamtmenge an reflektierendem Puzzolan vulkanischen Ursprungs von 5 bis 55 M.-%, bevorzugt 15 bis 50 M.-%, besonders bevorzugt 20 bis 35 M.-%, bezogen auf die Summe aus Haupt- und Nebenbestandteilen.

Angegebene Massenanteile beziehen sich im Rahmen der Erfindung selbstverständlich immer auf die Trockenmasse, sofern nichts anderes angegeben ist. Die Trockenmasse ist die Masse nach Trocknung auf Gewichtskonstanz bei 40°C.

Vorzugsweise handelt es sich bei der erfindungsgemäßen Weißzementmischung um einen CEM II oder CEM IV, vorzugsweise einen CEM IV/A-P, gemäß DIN 197-1:2011-11.

Dass die Weißzementmischung zumindest ein reflektierendes Puzzolan vulkanischen Ursprungs enthält, bedeutet, dass sie auch eine Mischung aus verschiedenen reflektierenden Puzzolanen vulkanischen Ursprungs enthalten kann.

Dies gilt im Rahmen der Anmeldung grundsätzlich für die Formulierung "zumindest eine(n)". Wenn zumindest eine Komponente enthalten sein kann, bedeutet dies im Rahmen dieser Anmeldung, dass auch eine Mischung aus verschiedenen dieser Komponenten enthalten sein kann.

Erfindungsgemäß weist das reflektierende Puzzolan vulkanischen Ursprungs zudem bei einer Wellenlänge von 440 nm eine Reflexion von 55 bis 75 %, vorzugsweise von 60 bis 70 %, auf.

Die Reflexion und die Farbwerte werden im Rahmen der Erfindung bestimmt mit einem Kugelspektralphotometer, bevorzugt einem Kugelspektralphotometer Ci64UV der Firma X-rite, mit einer UV-LED-Lichtquelle und D/8° Messgeometrie.

Vorzugsweise weist das reflektierende Puzzolan vulkanischen Ursprungs bei einer Wellenlänge von 580 nm zudem eine Reflexion von 60 bis 85 %, vorzugsweise von 65 bis 80 %, auf.

Im Rahmen der Erfindung wurde somit überraschenderweise herausgefunden, dass durch das Puzzolan die Anfälligkeit für Kalkausblühungen verringert werden kann, ohne dass sich der Weißgrad bzw. Helligkeitsgrad L* und die Gelbtönung b* im Vergleich zu einem reinen Weißzement deutlich verschlechtern, obwohl das Puzzolan einen deutlich geringeren Weißgrad bzw. Helligkeitsgrad L* und einen erhöhten Farbwert b* aufweist.

Überraschend war insbesondere, dass ein aus der erfindungsgemäßen Weißzementmischung hergestellter, erhärteter Prüfkörper trotz eines erhöhten Farbwertes b* sogar teilweise heller und strahlender wirkt als ein aus dem reinen Weißzement hergestellter Prüfkörper.

Dies war insbesondere deshalb überraschend, da die Reflexion des Puzzolans bei 440 nm unterhalb der Reflexion des reinen Weißzementklinkers mit Erstarrungsregler liegt. Dennoch bewirkt die Zugabe des Puzzolans in überraschender Weise eine optische Aufhellung des aus der Weißzementmischung hergestellten, hydratisierten Materials im Vergleich zu einem hydratisierten Material, das aus dem reinen Weißzement, also einer Mischung aus dem Weißzementklinker und Erstarrungsregler, hergestellt wird.

Die Herstellung des Prüfkörpers erfolgt gemäß DIN EN 196-1:2016-11, wobei abweichend von der DIN EN 196-1:2016-11 allerdings kein Sand verwendet wurde, sondern Mischungen aus reinem Zementleim mit einem Wassergehalt von 50 % hergestellt wurden, die Prüfkörperabmessungen 100 * 50 *10 mm³ betrugen und nach dem Ausschalen eine Lagerung im Normklima (20°C, 65 % rel. Feuchte) für 14 Tage erfolgte. Die verwendeten Formen waren nach oben offen und wiesen folgende Flächenmaße auf: 100*50 mm².

Sofern im Rahmen der Erfindung auf die Eigenschaften der erhärteten oder hydratisierten Weißzementmischung oder des erhärteten oder hydratisierten Weißzements verwiesen wird, werden die entsprechenden Messungen an einem wie oben beschrieben hergestellten Prüfkörper durchgeführt.

Offenbar trägt also das Reflexionsvermögen des reflektierenden Puzzolans bzw. dessen Hydratationsprodukte bei 440 nm zu einer optischen Aufhellung insbesondere der erhärteten bzw. hydratisierten Weißzementmischung bei.

Vorzugsweise weist die erfindungsgemäße Weißzementmischung einen Helligkeitsgrad L* von 88 bis 99, bevorzugt 90 bis 95, bestimmt gemäß DIN EN ISO/CIE 11664-4:2020-03, auf.

Außerdem weist die erfindungsgemäße Weißzementmischung vorzugsweise einen Farbwert b* von 2,0 bis 5,0, bevorzugt 2,5 bis 4,5, bestimmt gemäß DIN EN ISO/CIE 11664-4:2020-03, auf.

Vorzugsweise weist die Weißzementmischung zudem bei einer Wellenlänge von 440 nm eine Reflexion von 75 bis 90 %, vorzugsweise von 80 bis 85 %, und/oder bei einer Wellenlänge von 580 nm eine Reflexion von 80 bis 95 %, vorzugsweise von 85 bis 90 %, auf.

Dabei liegt die Reflexion der Weißzementmischung bei einer Wellenlänge von 440 nm unterhalb der Reflexion des in der Weißzementmischung enthaltenen Weißzements (=in der Weißzementmischung enthaltener Weißzementklinker + Erstarrungsregler).

Wie bereits erläutert, weist insbesondere ein aus der erfindungsgemäßen Weißzementmischung wie oben beschrieben hergestellter Prüfkörper eine ausreichend helle Farbe auf. Dies ist entscheidender als die Farbe der trockenen Weißzementmischung, da die Farbe der erhärteten Weißzementmischung ein Maß für die Farbe eines aus der Weißzementmischung hergestellten Bauteils ist.

Vorzugsweise weist die erhärtete Weißzementmischung bei einer Wellenlänge von 440 nm eine Reflexion von 70 bis 85 %, vorzugsweise von 75 bis 80 %, auf.

Die Reflexion der erhärteten Weißzementmischung ist dabei, wie bereits erläutert bei einer Wellenlänge von 440 nm höher als die Reflexion des erhärteten in der Weißzementmischung enthaltenen Weißzements (=in der Weißzementmischung enthaltener Weißzementklinker + Erstarrungsregler).

Vorzugsweise ist die Reflexion der erhärteten Weißzementmischung in dem gesamten Wellenlängenbereich von 440 nm bis 420 nm, bevorzugt von 440 nm bis 450 nm, besonders bevorzugt von 440 nm bis 500 nm höher die Reflexion des erhärteten in der Weißzementmischung enthaltenen Weißzements (=in der Weißzementmischung enthaltener Weißzementklinker + Erstarrungsregler).

Bei einer Wellenlänge von 580 nm beträgt die Reflexion der erhärteten Weißzementmischung zudem vorzugsweise von 75 bis 90 %, vorzugsweise von 80 bis 85 %.

Vorzugsweise weist die erhärtete Weißzementmischung einen Helligkeitsgrad L* von 90,0 bis 95,0, bevorzugt 91,0 bis 93,5, bestimmt gemäß DIN EN ISO/CIE 11664-4:2020-03, auf.

Außerdem weist die erhärtete Weißzementmischung vorzugsweise einen Farbwert b* von 2,5 bis 5,0, bevorzugt 3,3 bis 4,0, bestimmt gemäß DIN EN ISO/CIE 11664-4:2020-03, auf.

Außerdem weist das zumindest eine reflektierende Puzzolan vulkanischen Ursprungs vorzugsweise einen Helligkeitsgrad L* von 80 bis 95, bevorzugt 85 bis 92, bestimmt gemäß DIN EN ISO/CIE 11664-4:2020-03, auf.

Außerdem weist das zumindest eine reflektierende Puzzolan vulkanischen Ursprungs vorzugsweise einen Farbwert b* von 2,0 bis 6,0, bevorzugt 3,0 bis 5,5, bestimmt gemäß DIN EN ISO/CIE 11664-4:2020-03, auf.

Zudem weist das zumindest eine reflektierende Puzzolan vulkanischen Ursprungs vorzugsweise einen amorphen Anteil von 80 bis 99 M.-%, bevorzugt 85 bis 90 M.-%, bestimmt mittels Röntgendiffraktometrie und Auswertung mittels Rietveld ohne inneren Standard und PONKCS (Partial or No Known Crystal Structures), auf. Der hohe Glasanteil bewirkt unter anderem eine gute Mahlbarkeit des Puzzolans.

Zudem handelt es sich bei dem reflektierenden Puzzolan vulkanischen Ursprungs vorzugsweise um ein natürliches Puzzolan (P) gemäß DIN 197-1:2011-11.

Vorzugsweise handelt es sich vulkanisches Eruptivgestein, insbesondere ein vulkanisches Gesteinsglas, bevorzugt Bims oder, insbesondere zeolithischen, Tuff oder Perlit.

Insbesondere handelt es sich um ein vulkanisches Eruptivgestein aus der Ägäis.

Vorzugsweise weist das reflektierende Puzzolan vulkanischen Ursprungs außerdem einen SiO₂-Gehalt von 65 bis 90 M.-%, bevorzugt 75 bis 80 M.-%, bestimmt mittels chemischer Röntgenfluoreszenzanalyse gemäß DIN EN 196-2:2013-10, auf.

Vorzugsweise weist das reflektierende Puzzolan vulkanischen Ursprungs außerdem einen Gehalt an reaktiver Kieselsäure > 25 M.-%, bestimmt mittels Prüfung der Puzzolanität gemäß DIN EN 196-5:2011-06 auf.

Des Weiteren weist das reflektierende Puzzolan vulkanischen Ursprungs vorzugsweise einen Fe₂O₃-Gehalt von 0 bis 3 M.-%, bevorzugt 0 bis 1,5 M.-%, besonders bevorzugt 0,5 bis 1,5 M.-%, bestimmt mittels chemischer Röntgenfluoreszenzanalyse gemäß DIN EN 196-2:2013-10, auf.

Des Weiteren weist das reflektierende Puzzolan vulkanischen Ursprungs vorzugsweise einen Al₂O₃-Gehalt von 10 bis 15 M.-%, bevorzugt 11 bis 13,5 M.-%, besonders bevorzugt 12 bis 13,5 M.-%, bestimmt mittels chemischer Röntgenfluoreszenzanalyse gemäß DIN EN 196-2:2013-10, auf.

Außerdem weist das reflektierende Puzzolan vulkanischen Ursprungs vorzugsweise einen Blaine-Wert von 4000 bis 8000 cm²/g, bevorzugt von 5000 bis 7000 cm²/g, bestimmt gemäß DIN EN 196-6:2019-03, auf.

Vorzugsweise beträgt die Summe aus Weißzementklinker und reflektierendem Puzzolan vulkanischen Ursprungs in der Weißzementmischung zudem mindestens 60 M.-%, bevorzugt mindestens 80 M.-%, besonders bevorzugt mindestens 85 M.-%, ganz besonders bevorzugt mindestens 95 M.-%, bezogen auf die Summe aus Haupt- und Nebenbestandteilen. Besonders bevorzugt weist die Weißzementmischung ausschließlich Weißzementklinker und das zumindest eine reflektierende Puzzolan vulkanischen Ursprungs als Haupt- und Nebenbestandteile auf.

Falls weitere Bestandteile vorhanden sind, weist die Weißzementmischung vorzugsweise Kalksteinmehl und/oder gefälltes Calciumcarbonat (PCC) und/oder ein anderes Puzzolan, insbesondere ein natürliches getempertes Puzzolan, bevorzugt calcinierter Ton, und/oder Silicastaub als weiteren Hauptbestandteil oder Nebenbestandteil auf.

Außerdem besteht die Weißzementmischung vorzugsweise zu mindestens 95 M.-%, bevorzugt zu 98 M.-%, besonders bevorzugt zu 100 M.-% aus den Haupt- und Nebenbestandteilen und Erstarrungsregler.

Außerdem weist die Weißzementmischung vorzugsweise einen Blaine-Wert von 3500 bis 7000 cm²/g, bevorzugt von 4500 bis 6000 cm²/g, bestimmt gemäß DIN EN 196-6:2019-03, auf.

Wie bereits erläutert, weist die erfindungsgemäße Weißzementmischung zudem einen höheren Sulfatwiderstand auf als der reine Weißzement.

Dies wird unter anderem durch den Anteil an Puzzolan gewährleistet. Denn bekanntermaßen weist Weißzementklinker herstellungsbedingt einen höheren Ca(OH)₂-Gehalt als Grauzementklinker auf.

Insbesondere weist die Weißzementmischung einen Ca(OH)₂-Gehalt von 0,1 bis 5,0 M.-%, bevorzugt 0,1 bis 4,0 M.-%, besonders bevorzugt 0,2 bis 3,5 M.-%, ganz besonders bevorzugt 0,3 bis 3,0 M.-%, bestimmt mittels Röntgendiffraktometrie und Auswertung mittels Rietveld ohne inneren Standard, auf.

Zudem entsteht bei der Hydratation der Klinkerphasen C₃S und C₂S bekanntermaßen ebenfalls Ca(OH)₂. Durch die puzzolanische Reaktion des Puzzolans wird das Ca(OH)₂ chemisch gebunden und somit die chemische Widerstandsfähigkeit der Weißzementmischung erhöht. Auch wird das Ausblühen verringert.

Weißzementklinker weist zudem in der Regel einen höheren C₃A-Gehalt als Grauzementklinker auf. Insbesondere ist aufgrund des Abschreckens bei der Herstellung der Gehalt an amorphem C₃A höher.

Insbesondere weist der Weißzementklinker der erfindungsgemäßen Weißzementmischung einen C₃A-Gehalt von 5 bis 20 M.-%, bevorzugt 8 bis 18 M.-%, besonders bevorzugt 10 bis 15 M.-%, bestimmt mittels Röntgendiffraktometrie und Auswertung mittels Rietveld ohne inneren Standard und PONKCS. Vorzugsweise beträgt dabei der Anteil an amorphem C₃A, bezogen auf die Gesamtmenge an C₃A mindestens 30 M.-%, insbesondere 30-90 M.-%.

Bekanntermaßen ist Zement mit einem hohen C₃A-Gehalt anfällig für Sulfatangriff, da Sulfate mit der unreagierten Klinkerphase C₃A und Ca(OH)₂ eine kristallwasserreiche Verbindung (Ettringit) bilden, die einen Quellprozess und die Zerstörung des Gefüges des mit dem Zement hergestellten Bauteils bewirkt. Die Sulfatbeständigkeit des Zements ist dabei noch geringer, je geringer der SO₃-Gehalt des Zements ist, da dann die während der Hydratation gewünschte Ettringitbidung reduziert wird und mehr Monosulfat gebildet wird und mehr unreagiertes C₃A übrig bleibt.

Überraschenderweise wurde nun im Rahmen der Erfindung herausgefunden, dass die erfindungsgemäße Weißzementmischung trotz des hohen C₃A-Gehalts des Weißzementklinkers und eines geringen SO₃-Gehalts eine hohe Widerstandsfähigkeit gegen Sulfatangriff aufweist. Das resultiert unter anderem aus der Reaktion des Puzzolans mit dem Portlandit, welches dabei verbraucht wird.

Zudem wurde überraschenderweise herausgefunden, dass die Weißzementmischung trotz des geringen SO₃-Gehalts hohe Frühfestigkeiten aufweist. Insbesondere wurde herausgefunden, dass die Frühfestigkeiten am Anfang sogar höher sind. Der geringe SO₃-Gehalt hat zudem Kostenvorteile, da die für Weißzement geeigneten, weißen Erstarrungsregler teurer sind als herkömmliche Erstarrungsregler.

Vorzugsweise weist die Weißzementmischung einen SO₃-Gehalt von 2,0 bis 4,0 M.-%, bevorzugt 2,5 bis 3,0 M.-%, bezogen auf die Gesamtmasse der Zementmischung, bestimmt mittels chemischer Röntgenfluoreszenzanalyse gemäß DIN EN 196-2:2013-10 auf.

Der SO₃-Gehalt der Weißzementmischung resultiert hauptsächlich aus dem Erstarrungsregler. Infolgedessen wird der Gehalt an Erstarrungsregler auf den gewünschten Gehalt an SO₃ abgestimmt.

Bei dem zumindest einen Erstarrungsregler handelt es sich zudem vorzugsweise um Gips oder Halbhydrat oder Anhydrit. Dass die Zementmischung zumindest einen Erstarrungsregler enthält, bedeutet (wie oben bereits erwähnt), dass sie auch eine Mischung aus verschiedenen Erstarrungsreglern enthalten kann.

Zudem weist der Weißzementklinker vorzugsweise einen C₃S-Gehalt von 50 bis 70 M.-%, bevorzugt 55 bis 65 M.-%, bestimmt mittels Röntgendiffraktometrie und Auswertung mittels Rietveld ohne inneren Standard, auf.

Außerdem weist der Weißzementklinker vorzugsweise einen C₂S-Gehalt von 10 bis 30 M.-%, bevorzugt 12 bis 22 M.-%, bestimmt mittels Röntgendiffraktometrie und Auswertung mittels Rietveld ohne inneren Standard, auf.

Des Weiteren weist der Weißzementklinker vorzugsweise einen Fe₂O₃-Gehalt von 0 bis 0,5 M.-%, bevorzugt 0 bis 0,3 M.-%, besonders bevorzugt 0,1 bis 0,3 M.-%, bestimmt mittels chemischer Röntgenfluoreszenzanalyse gemäß DIN EN 196-2:2013-10, auf.

Des Weiteren weist die Weißzementmischung vorzugsweise einen amorphen C₃A-Gehalt von 5 bis 16 M.-%, bevorzugt 7 bis 15 M.-%, besonders bevorzugt 8 bis 14 M.-%, bestimmt mittels Röntgendiffraktometrie und Auswertung mittels Rietveld ohne inneren Standard und PONKCS, auf.

Zudem weist die Weißzementmischung vorzugsweise einen kristallinen C₃A-Gehalt von 1 bis 6 M.-%, bevorzugt 1,5 bis 5 M.-%, besonders bevorzugt 2 bis 4 M.-%, bestimmt mittels Röntgendiffraktometrie und Auswertung mittels Rietveld ohne inneren Standard, auf.

Des Weiteren weist die Weißzementmischung vorzugsweise einen Fe₂O₃-Gehalt von 0 bis 1 M.-%, bevorzugt 0 bis 0,6 M.-%, besonders bevorzugt 0,2 bis 0,6 M.-%, bestimmt mittels chemischer Röntgenfluoreszenzanalyse gemäß DIN EN 196-2:2013-10, auf.

Die Herstellung der erfindungsgemäßen Weißzementmischung erfolgt dabei vorzugsweise durch Mischen der einzelnen Zementmischungsbestandteile miteinander.

Die einzelnen Zementmischungsbestandteile können dabei vor dem Mischen bereits gemahlen sein und/oder zumindest teilweise gemeinsam vermahlen werden. Es liegt also im Rahmen der Erfindung, die Bestandteile der erfindungsgemäßen Weißzementmischung in jeglicher Kombination vor dem Mischen mit den anderen Bestandteilen gemeinsam zu vermahlen.

Vorzugsweise wird das zumindest eine Puzzolan zumindest mit dem Weißzementklinker und dem Erstarrungsregler gemeinsam vermahlen. Dabei kann das Puzzolan auch feucht zugegeben werden, da es aufgrund der beim Mahlen entstehenden Mahlwärme trocknet. Es ist insbesondere sogar vorteilhaft, wenn das Puzzolan feucht zugegeben wird, da dies zur Kühlung dient und das Eindüsen von Wasser entfallen kann oder zumindest die Wassermenge reduziert werden kann. Die Kühlung dient dazu, um das Verhältnis Gips zu Halbhydrat auszusteuern, da verhindert wird, dass Gips (Erstarrungsregler) entwässert wird und sich zu Halbhydrat umwandelt, welches reaktiver ist.

Es war dabei überraschend, dass eine gemeinsame Vermahlung möglich ist, obwohl im Rahmen eines Zeisel-Tests festgestellt wurde, dass das Puzzolan deutlich weicher ist als der Weißzementklinker. Eine Anreicherung des Puzzolans in der Feinfraktion wäre somit eigentlich zu erwarten gewesen. Offenbar trägt der hohe amorphe Anteil des Puzzolans zu einer guten Mahlbarkeit und zu einer guten Produktion eines homogenen Bindemittels bei.

Die erfindungsgemäße Weißzementmischung wird vorzugsweise in einer Trockenbetonmischung oder einer Trockenmörtelmischung und/oder in einer Frischbetonmasse oder einer Frischmörtelmasse bzw. zur Herstellung derselben verwendet.

### Ausführungsbeispiele:

Im Rahmen der Ausführungsbeispiele wurden folgende Rohstoffe mit folgenden Eigenschaften verwendet:

**Tabelle 1: Eigenschaften des Weißzements Strong R, Dyckerhoff GmbH**

| **Weißzement Strong R** | |
|---|---|
| **Blaine-Wert [cm²/g]** | 5950 |
| **SO₃-Gehalt [M.-%]** | 3,28 |
| **CaO-Gehalt [M.-%] (Freikalk)** | 0,7 |
| **Portlandit-Gehalt [M.-%]** | 2,2 |
| **C₃S-Gehalt [M.-%]** | 61,2 |
| **C₃A-Gehalt [M.-%] (Kubisch + Orthorhombisch)** | 4,9 |
| **C₃A-Gehalt [M.-%] (amorph)** | 11,1 |
| **L*** | 95,1 |
| **a*** | -0,7 |
| **b*** | 2,7 |

**Tabelle 2: Eigenschaften des Weißzements Strong N, Dyckerhoff GmbH**

| **Weißzement Strong N** | |
|---|---|
| **Blaine-Wert [cm²/g]** | 5350 |
| **SO₃-Gehalt [M.-%]** | 3,19 |
| **CaO-Gehalt [M.-%] (Freikalk)** | 1,2 |
| **Portlandit-Gehalt [M.-%]** | 3,0 |
| **C₃S-Gehalt [M.-%]** | 53,2 |
| **C₃A-Gehalt [M.-%] (Kubisch + Orthorhombisch)** | 3,2 |
| **C₃A-Gehalt [M.-%] (amorph)** | 12,6 |
| **L*** | 94,2 |
| **a*** | -0,9 |
| **b*** | 2,9 |

**Tabelle 3: Eigenschaften des Puzzolans P1**

| | |
|---|---|
| | |
| **Beschreibung** | Perlit |
| **Provenienz** | Ägäis |
| **Blaine-Wert [cm²/g]** | 6930 |
| **Reindichte [g/cm³]** | 2,3 |
| **Quarz-Gehalt [M.-%]** | 2,0 |
| **Feldspat [M.-%]** | 4,5 |
| **Mordenit [M.-%]** | 7,0 |
| **Amorpher Anteil [M.-%]** | 86,5 |
| **Fe₂O₃ [M.-%] Glv.-haltig** | 0,7 |
| **L*** | 89,5 |
| **a*** | -0,3 |
| **b*** | 5,1 |

**Tabelle 4: Eigenschaften des Puzzolans P2**

| | |
|---|---|
| | |
| **Beschreibung** | Bims |
| **Provenienz** | Ägäis |
| **Blaine-Wert [cm²/g]** | 5420 |
| **Reindichte [g/cm³]** | 2,4 |
| **Quarz-Gehalt [M.-%]** | 1,0 |
| **Feldspat [M.-%]** | 9,5 |
| **Amorpher Anteil [M.-%]** | 89,5 |
| **Fe₂O₃ [M.-%] Glv.-haltig** | 1,1 |
| **L*** | 85,2 |
| **a*** | 0,2 |
| **b*** | 3,4 |

### Ausführungsbeispiel 1:

Im Rahmen dieses Ausführungsbeispiels wurde die Reflexion von Weißzement, unterschiedlichen Weißzementmischungen und daraus hergestellten Prüfkörpern mit einem Kugelspektralphotometer Ci64UV der Firma X-rite mit einer UV-LED-Lichtquelle und D/8° Messgeometrie gemessen. Die Prüfkörper wurden hergestellt gemäß DIN EN 196-1:2016-11, wobei abweichend von der DIN EN 196-1:2016-11 eine Zementleimmischung ohne Sand mit 50 % Wasser hergestellt wurde, die Prüfkörper folgende Abmessungen aufwiesen: 100 * 50 *10 mm³, und die Aushärtung bei Lagerung im Normklima (20°C, 65 % rel. Feuchte) für 14 Tage erfolgte.

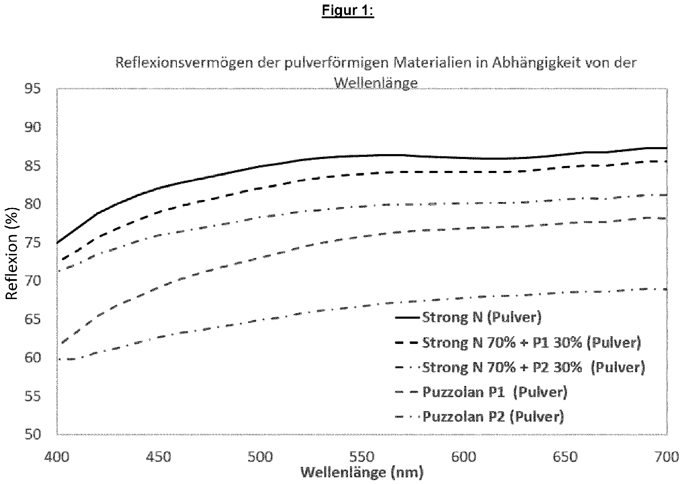

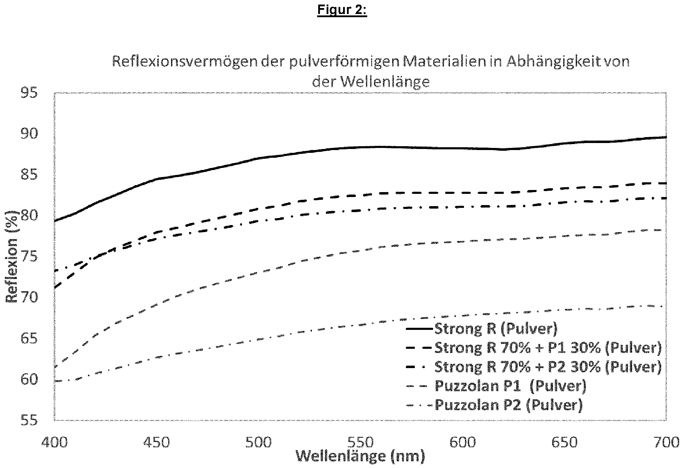

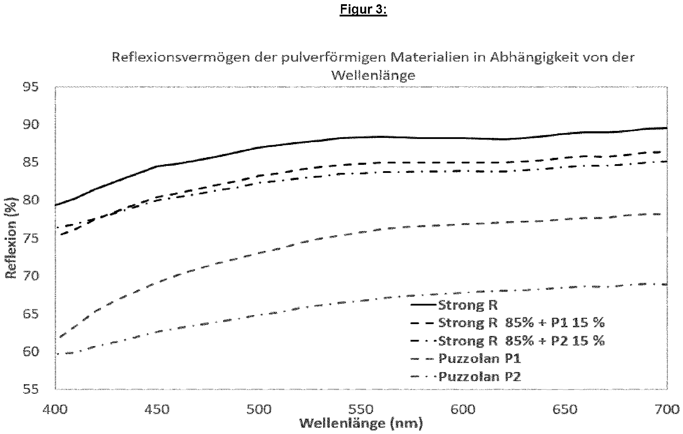

Aus den Figuren 1-3 ist gut zu erkennen, dass die Reflexion des reinen Weißzements (Strong R bzw. Strong N) im gesamten Wellenlängenbereich jeweils deutlich über der Reflexion der einzelnen Puzzolane und auch der Weißzementmischungen liegt.

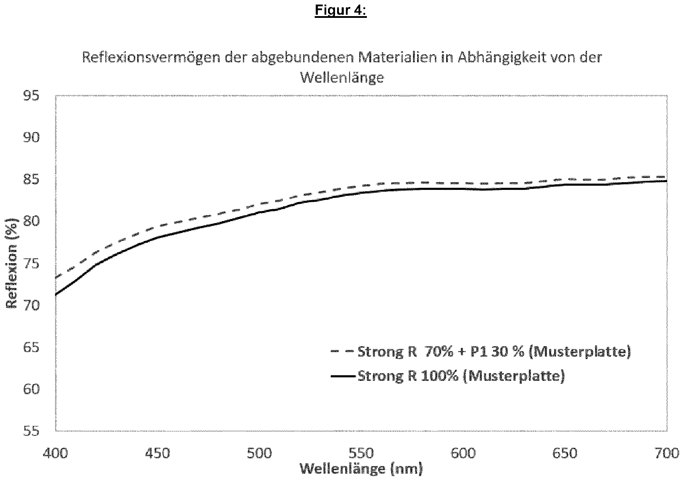

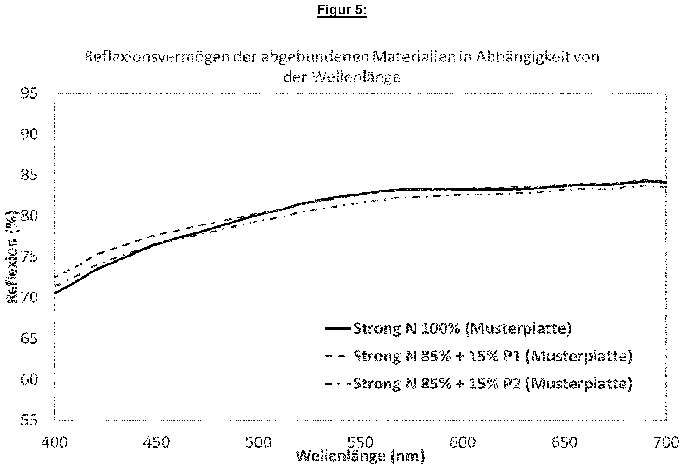

Überraschenderweise liegt allerdings die Reflexion der aus dem Weißzement bzw. den Weißzementmischungen hergestellten Prüfkörper in einem ähnlichen Bereich. Teilweise ist die Reflexion sogar bei den aus den Weißzementmischungen hergestellten Prüfkörpern höher als bei den aus dem Weißzement hergestellten Prüfkörpern (siehe Figuren 4 und 5).

Die Farbwerte der trockenen Weißzementmischungen und der daraus hergestellten Prüfkörper sind in nachstehender Tabelle aufgeführt:

**Tabelle 5: Farbwerte der trockenen Weißzementmischungen und der daraus hergestellten Prüfkörper**

| **Muster** | L* | a* | b* |
|---|---|---|---|
| Strong R 100% (Prüfkörper) | 93,0 | -0,1 | 4,0 |
| Strong R 70% + P1 30 % (Prüfkörper) | 93,4 | -0,1 | 3,5 |
| Strong N 100% (Prüfkörper) | 92,6 | -0,5 | 4,3 |
| Strong N 85% + P1 15 % (Prüfkörper) | 92,7 | -0,1 | 3,5 |
| Strong N 85% + P1 15 % (Prüfkörper) | 92,2 | -0,1 | 3,7 |
| Strong R 85 % + P1 15 % (Pulver) | 93,6 | -0,6 | 3,1 |
| Strong R 85 % + P2 15 % (Pulver) | 93,1 | -0,4 | 2,6 |
| Strong R 70 % + P1 30 % (Pulver) | 92,6 | -0,6 | 3,3 |
| Strong R 70 % + P2 30 % (Pulver) | 91,8 | -0,3 | 2,6 |
| Strong N 70 % + P1 30 % (Pulver) | 93,2 | -0,6 | 3,5 |
| Strong N 70 % + P2 30 % (Pulver) | 91,4 | -0,4 | 2,8 |

### Ausführungsbeispiel 2:

Im Rahmen dieses Ausführungsbeispiels wurden eine Putzmischung mit dem Weißzement Strong R und eine Putzmischung mit erfindungsgemäßer Weißzementmischung aus 70 M.-% Weißzement Strong R und 30 M.-% Puzzolan P1 bezüglich ihrer Sulfatbeständigkeit getestet.

**Tabelle 6: Zusammensetzung der Putzmischung mit Weißzement**

| | **M.-%** |
|---|---|
| **Weißzement** | 13,9 |
| **Wasser** | 16,7 |
| **Sand, 0 - 0,25 mm** | 28,6 |
| **Sand, 0,1 - 0,5 mm** | 20,4 |
| **Kalksteinmehl < 25 µm** | 20,4 |

**Tabelle 7: Zusammensetzung der Putzmischung mit erfindungsgemäßer Weißzementmischung**

| | **M.-%** |
|---|---|
| **Weißzement** | 9,7 |
| **Puzzolan P1** | 4,2 |
| **Wasser** | 16,7 |
| **Sand, 0 - 0,25 mm** | 28,6 |
| **Sand, 0,1 - 0,5 mm** | 20,4 |
| **Kalksteinmehl < 25 µm** | 20,4 |

Die Putzmischungen wurden in Flachprismenformen (10*40*160mm) gefüllt und 2 Tage bei (20°C/95%RH) gelagert. Anschließend wurden die Flachprismen für 12 Tage in gesättigter Ca(OH)₂-Lösung gelagert (20°C). Die Prismen waren zum Zeitpunkt der Prüfung 14 Tage alt.

Die Prüfung der Längenänderung der in einer 4,4 %igen Na₂SO₄-Lösung gelagerten Prüfkörper erfolgte gemäß dem Prüfplan für die Zulassungsprüfung von Hochofenzement CEM III/A 52,5 N-HS/NA des Deutsches Instituts für Bautechnik (2006).

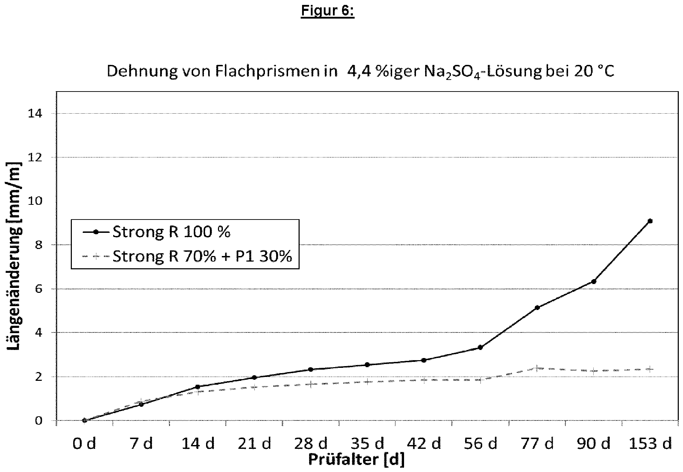

Aus Figur 6 ist eindeutig zu entnehmen, dass die Längenänderung bei der Putzmischung mit der erfindungsgemäßen Weißzementmischung deutlich geringer ist. Die Putzmischung ist im Vergleich also deutlich sulfatbeständiger.

### Ausführungsbeispiel 3:

Im Rahmen dieses Ausführungsbeispiels wurden Weißzementmischungen mit unterschiedlichem Sulfatgehalt bezüglich ihrer Festigkeiten gemäß DIN EN 196-1:2016:11 getestet.

**Tabelle 8: Zusammensetzungen der Weißzementmischungen**

| | **M.-%** | | |
|---|---|---|---|
| | Weißzement Strong R | Puzzolan P1 | Anhydrit |
| **Weißzementmischung 1 (2,5 M.-% SO₃)** | 69,2 | 30,0 | 0,8 |
| **Weißzementmischung 2 (3,0 M.-% SO₃)** | 68,3 | 30,0 | 1,7 |
| **Weißzementmischung 3 (3,5 M.-% SO₃)** | 67,5 | 30,0 | 2,5 |
| **Weißzementmischung 4 (4,0 M.-% SO₃)** | 66,6 | 30,0 | 3,4 |

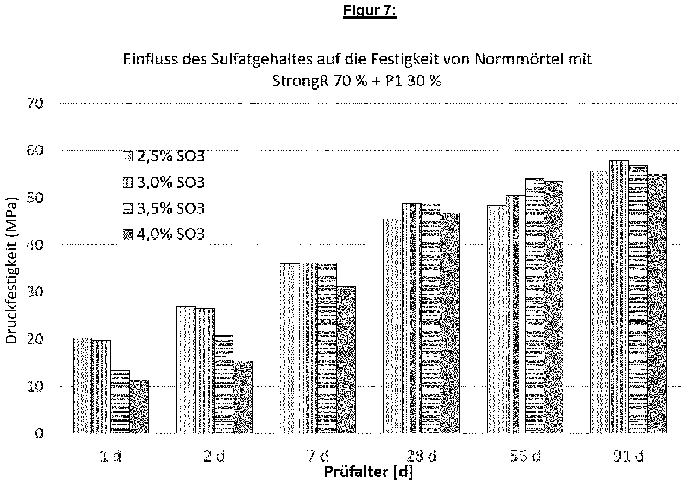

Aus Figur 7 ist zu erkennen, dass insbesondere die Frühfestigkeiten bei höherem SO₃-Gehalt deutlich niedriger sind. Dies war überraschend.

### Ausführungsbeispiel 4:

Im Rahmen dieses Ausführungsbeispiels wurden Weißzementklinker, Gips und Puzzolan in einer Laborkugelmühle gemeinsam auf einen Blaine-Wert von 5000 cm²/g vermahlen. Die Mahldauer betrug 36 Minuten.

**Tabelle 9: Zusammensetzungen der zu mahlenden Mischung**

| | **M.-%** |
|---|---|
| **Weißzementklinker** | 65,1 |
| **Puzzolan** | 30,0 |
| **Gips** | 4,9 |

Das resultierende Bindemittel wurde händisch abgesiebt und die Siebfraktionen mittels Rietveld-Analyse auf ihre mineralische Zusammensetzung untersucht.

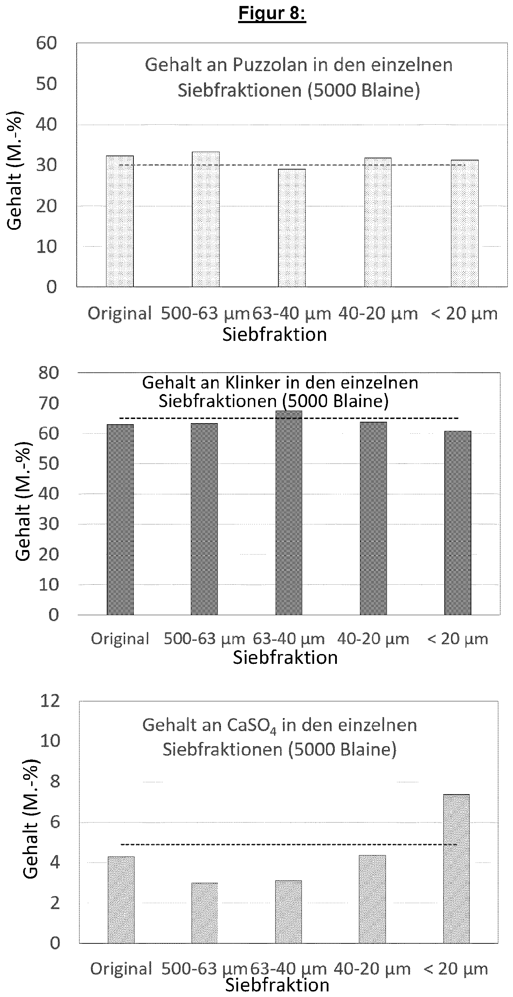

In Figur 8 ist zu erkennen, dass sich das Puzzolan nicht in der Feinfraktion anreichert, sondern in allen Siebfraktionen zu etwa gleichen Teilen vorhanden ist.

Abschließend wird darauf hingewiesen, dass alle genannten, insbesondere beanspruchten, Merkmale der Weißzementmischung, der Trockenmörtelmischung, der Trockenbetonmischung, der Frischmörtelmasse sowie der Frischbetonmasse für sich genommen und in jeglicher Kombination besonders vorteilhaft und Gegenstand der vorliegenden Erfindung sind.

Zudem sind die jeweils angegebenen Ober- und Untergrenzen der einzelnen Bereichsangaben erfindungsgemäß alle miteinander kombinierbar.

## Patentansprüche

1. Trockene, hydraulisch erhärtende, Weißzementmischung, aufweisend 95-100 M.-% Hauptbestandteile und 0-5 M.-% Nebenbestandteile, jeweils bezogen auf die Summe aus Haupt- und Nebenbestandteilen, sowie zusätzlich zu den Haupt- und Nebenbestandteilen zumindest einen Erstarrungsregler, wobei die Zementmischung als Hauptbestandteil
a) Weißzementklinker, vorzugsweise in einer Menge von 45 bis 95 M.-%, bevorzugt 50 bis 85 M.-%, besonders bevorzugt 65 bis 80 M.-%, bezogen auf die Summe aus Haupt- und Nebenbestandteilen,
und
b) zumindest ein Puzzolan vulkanischen Ursprungs,
aufweist,
**dadurch gekennzeichnet, dass**
das zumindest eine Puzzolan vulkanischen Ursprungs bei einer Wellenlänge von 440 nm eine Reflexion von 55 bis 75 %, vorzugsweise von 60 bis 70 %, bestimmt mit einem Kugelspektralphotometer mit einer UV-LED-Lichtquelle und D/8° Messgeometrie, aufweist,
und die Weißzementmischung eine Gesamtmenge an reflektierendem Puzzolan vulkanischen Ursprungs von 5 bis 55 M.-%, bevorzugt 15 bis 50 M.-%, besonders bevorzugt 20 bis 35 M.-%, bezogen auf die Summe aus Haupt- und Nebenbestandteilen, aufweist.

2. Weißzementmischung nach Anspruch 1,
**dadurch gekennzeichnet, dass**
die Weißzementmischung
a) einen Ca(OH)₂-Gehalt von 0,1 bis 5,0 M.-%, vorzugsweise 0,1 bis 4,0 M.-%, bevorzugt 0,2 bis 3,5 M.-%, besonders bevorzugt 0,3 bis 3,0 M.-%, bestimmt mittels Röntgendiffraktometrie und Auswertung mittels Rietveld ohne inneren Standard,
und
b) einen SO₃-Gehalt von 2,0 bis 4,0 M.-%, bevorzugt 2,5 bis 3,0 M.-%, bestimmt mittels chemischer Röntgenfluoreszenzanalyse gemäß DIN EN 196-2:2013-10,
aufweist.

3. Weißzementmischung nach einem der vorhergehenden Ansprüche,
**dadurch gekennzeichnet, dass**
das zumindest eine reflektierende Puzzolan vulkanischen Ursprungs ein natürliches Puzzolan (P) gemäß DIN 197-1:2011-11 ist und vorzugsweise aus vulkanischem Eruptivgestein, insbesondere einem vulkanischen Gesteinsglas, bevorzugt Bims oder, insbesondere zeolithischem, Tuff oder Perlit besteht.

4. Weißzementmischung nach einem der vorhergehenden Ansprüche,
**dadurch gekennzeichnet, dass**
a) das zumindest eine reflektierende Puzzolan vulkanischen Ursprungs bei einer Wellenlänge von 580 nm eine Reflexion von 60 bis 85 %, vorzugsweise von 65 bis 80 %, bestimmt mit einem Kugelspektralphotometer mit einer UV-LED-Lichtquelle und D/8° Messgeometrie, aufweist,
und/oder
b) das zumindest eine reflektierende Puzzolan vulkanischen Ursprungs einen Helligkeitsgrad L* von 80 bis 95, bevorzugt 85 bis 92, bestimmt gemäß DIN EN ISO/CIE 11664-4:2020-03, aufweist.
und/oder
c) das zumindest eine reflektierende Puzzolan vulkanischen Ursprungs einen Farbwert b* von 2,0 bis 6,0, bevorzugt 3,0 bis 5,5, bestimmt gemäß DIN EN ISO/CIE 11664-4:2020-03, aufweist.

5. Weißzementmischung nach einem der vorhergehenden Ansprüche,
**dadurch gekennzeichnet, dass**
a) das zumindest eine reflektierende Puzzolan vulkanischen Ursprungs einen amorphen Anteil von 80 bis 99 M.-%, bevorzugt 85 bis 90 M.-%, bestimmt mittels Röntgendiffraktometrie und Auswertung mittels Rietveld ohne inneren Standard und PONKCS, aufweist,
und/oder
b) das zumindest eine reflektierende Puzzolan vulkanischen Ursprungs einen SiO₂-Gehalt von 65 bis 90 M.-%, bevorzugt 75 bis 80 M.-%, bestimmt mittels chemischer Röntgenfluoreszenzanalyse gemäß DIN EN 196-2:2013-10, aufweist,
und/oder
c) das zumindest eine reflektierende Puzzolan vulkanischen Ursprungs einen Gehalt an reaktiver Kieselsäure > 25 M.-%, bestimmt mittels Prüfung der Puzzolanität gemäß DIN EN 196-5:2011-06 aufweist,
und/oder
d) das zumindest eine reflektierende Puzzolan vulkanischen Ursprungs einen Fe₂O₃-Gehalt von 0 bis 3,0 M.-%, bevorzugt 0 bis 1,5 M.-%, besonders bevorzugt 0,5 bis 1,5 M.-%, bestimmt mittels chemischer Röntgenfluoreszenzanalyse gemäß DIN EN 196-2:2013-10, aufweist,
und/oder
e) das zumindest eine reflektierende Puzzolan vulkanischen Ursprungs einen Al₂O₃-Gehalt von 10,0 bis 15,0 M.-%, vorzugsweise 11 bis 13,5 M.-%, bevorzugt 12,0 bis 13,5 M.-%, bestimmt mittels chemischer Röntgenfluoreszenzanalyse gemäß DIN EN 196-2:2013-10, aufweist.

6. Weißzementmischung nach einem der vorhergehenden Ansprüche,
**dadurch gekennzeichnet, dass**
a) das zumindest eine reflektierende Puzzolan vulkanischen Ursprungs einen Blaine-Wert von 4000 bis 8000 cm²/g, bevorzugt von 5000 bis 7000 cm²/g, bestimmt gemäß DIN EN 196-6:2019-03, aufweist,
und/oder
b) die Summe aus Weißzementklinker und reflektierendem Puzzolan vulkanischen Ursprungs in der Weißzementmischung mindestens 60 M.-%, bevorzugt mindestens 80 M.-%, besonders bevorzugt mindestens 85 M.-%, ganz besonders bevorzugt mindestens 95 M.-%, insbesondere 100 M.-%, bezogen auf die Summe aus Haupt- und Nebenbestandteilen, beträgt,
und/oder
c) die Weißzementmischung Kalksteinmehl und/oder gefälltes Calciumcarbonat (PCC) und/oder ein anderes Puzzolan, insbesondere ein natürliches getempertes Puzzolan, bevorzugt calcinierten Ton, und/oder Silicastaub, als weiteren Hauptbestandteil oder Nebenbestandteil aufweist.

7. Weißzementmischung nach einem der vorhergehenden Ansprüche,
**dadurch gekennzeichnet, dass**
a) die Weißzementmischung einen Weißgrad L* von 88 bis 99, vorzugsweise von 90 bis 95, bestimmt gemäß DIN EN ISO/CIE 11664-4:2020-03, aufweist,
und/oder
b) die Weißzementmischung einen Farbwert b* von 2,0 bis 5,0, vorzugsweise von 2,5 bis 4,5, bestimmt gemäß DIN EN ISO/CIE 11664-4:2020-03, aufweist,
und/oder
c) die Weißzementmischung bei einer Wellenlänge von 440 nm eine Reflexion von 75 bis 90 %, vorzugsweise von 80 bis 85 %, bestimmt mit einem Kugelspektralphotometer mit einer UV-LED-Lichtquelle und D/8° Messgeometrie, und/oder bei einer Wellenlänge von 580 nm eine Reflexion von 80 bis 95 %, vorzugsweise von 85 bis 90 %, bestimmt mit einem Kugelspektralphotometer mit einer UV-LED-Lichtquelle und D/8° Messgeometrie, aufweist.

8. Weißzementmischung nach einem der vorhergehenden Ansprüche,
**dadurch gekennzeichnet, dass**
a) die erhärtete, hydratisierte Weißzementmischung bei einer Wellenlänge von 440 nm eine Reflexion von 70 bis 85 %, vorzugsweise von 75 bis 80 %, bestimmt mit einem Kugelspektralphotometer mit einer UV-LED-Lichtquelle und D/8° Messgeometrie, aufweist,
und/oder
b) die Reflexion der erhärteten Weißzementmischung bei einer Wellenlänge von 440 nm höher ist als die Reflexion des erhärteten in der Weißzementmischung enthaltenen Weißzements, bestimmt mit einem Kugelspektralphotometer mit einer UV-LED-Lichtquelle und D/8° Messgeometrie,
und/oder
c) die Reflexion der erhärteten Weißzementmischung in dem Wellenlängenbereich von 440 nm bis 420 nm, bevorzugt von 440 nm bis 450 nm, besonders bevorzugt von 440 nm bis 500 nm, höher ist als die Reflexion des erhärteten in der Weißzementmischung enthaltenen Weißzements, bestimmt mit einem Kugelspektralphotometer mit einer UV-LED-Lichtquelle und D/8° Messgeometrie,
und/oder
d) die erhärtete Weißzementmischung einen Helligkeitsgrad L* von 90,0 bis 95,0, bevorzugt 91,0 bis 93,5, bestimmt gemäß DIN EN ISO/CIE 11664-4:2020-03, aufweist,
und/oder
e) die erhärtete Weißzementmischung einen Farbwert b* von 2,5 bis 5,0, bevorzugt 3,3 bis 4,0, bestimmt gemäß DIN EN ISO/CIE 11664-4:2020-03, aufweist.

9. Weißzementmischung nach einem der vorhergehenden Ansprüche,
**dadurch gekennzeichnet, dass**
a) die Weißzementmischung zu mindestens 95 M.-%, bevorzugt zu 98 M.-%, besonders bevorzugt zu 100 M.-% aus den Haupt- und Nebenbestandteilen und Erstarrungsregler besteht.
und/oder
b) die Weißzementmischung einen Blaine-Wert von 3500 bis 7000 cm²/g, bevorzugt von 4500 bis 6000 cm²/g, bestimmt gemäß DIN EN 196-6:2019-03, aufweist,
und/oder
c) die Weißzementmischung ein Normalzement gemäß DIN 197-1:2011-11 oder DIN 197-5:2021-07 ist, vorzugsweise ein CEM II oder ein CEM IV, vorzugsweise ein CEM IV/A-P.

10. Weißzementmischung nach einem der vorhergehenden Ansprüche,
**dadurch gekennzeichnet, dass**
a) der Weißzementklinker einen C₃A-Gehalt von 5 bis 20 M.-%, bevorzugt 8 bis 18 M.-%, besonders bevorzugt 10 bis 15 M.-%, bestimmt mittels Röntgendiffraktometrie und Auswertung mittels Rietveld ohne inneren Standard und PONKCS, aufweist,
und/oder
b) der Anteil an amorphem C₃A in der Weißzementmischung, bezogen auf die Gesamtmenge an C₃A, mindestens 30 M.-%, insbesondere 30 bis 90 M.-%, beträgt,
und/oder
c) die Weißzementmischung einen amorphen C₃A-Gehalt von 5 bis 16 M.-%, bevorzugt 7 bis 15 M.-%, besonders bevorzugt 8 bis 14 M.-%, bestimmt mittels Röntgendiffraktometrie und Auswertung mittels Rietveld ohne inneren Standard und PONKCS, aufweist,
und/oder
d) die Weißzementmischung einen kristallinen C₃A-Gehalt von 1 bis 6 M.-%, bevorzugt 1,5 bis 5 M.-%, besonders bevorzugt 2 bis 4 M.-%, bestimmt mittels Röntgendiffraktometrie und Auswertung mittels Rietveld ohne inneren Standard, aufweist.

11. Weißzementmischung nach einem der vorhergehenden Ansprüche,
**dadurch gekennzeichnet, dass**
a) der Weißzementklinker einen C₂S-Gehalt von 10 bis 30 M.-%, bevorzugt 12 bis 22 M.-%, bestimmt mittels Röntgendiffraktometrie und Auswertung mittels Rietveld ohne inneren Standard, aufweist,
und/oder
b) der Weißzementklinker einen C₃S-Gehalt von 50 bis 70 M.-%, bevorzugt 55 bis 65 M.-%, bestimmt mittels Röntgendiffraktometrie und Auswertung mittels Rietveld ohne inneren Standard, aufweist,
und/oder
c) die Weißzementmischung einen Fe₂O₃-Gehalt von 0 bis 1,0 M.-%, bevorzugt 0 bis 0,6 M.-%, besonders bevorzugt 0,2 bis 0,6 M.-%, bestimmt mittels chemischer Röntgenfluoreszenzanalyse gemäß DIN EN 196-2:2013-10, aufweist.

12. Weißzementmischung nach einem der vorhergehenden Ansprüche,
**dadurch gekennzeichnet, dass**
es sich bei dem zumindest einen Erstarrungsregler einen CaSO₄-haltigen Erstarrungsregler, vorzugsweise um Gips oder Halbhydrat oder Anhydrit handelt.

13. Verwendung eines Puzzolans vulkanischen Ursprungs, das bei einer Wellenlänge von 440 nm eine Reflexion von 55 bis 75 %, vorzugsweise von 60 bis 70 %, aufweist, in einer Weißzementklinker und zumindest einen Erstarrungsregler aufweisenden trockenen, hydraulisch erhärtenden Weißzementmischung, insbesondere in einer Weißzementmischung gemäß einem der vorhergehenden Ansprüche.

14. Verwendung nach Anspruch 13,
**dadurch gekennzeichnet, dass**
das Puzzolan vulkanischen Ursprungs in der Weißzementmischung zur Erhöhung der Reflexion der aus der Weißzementmischung hergestellten erhärteten Weißzementmischung bei einer Wellenlänge von 440 nm, vorzugsweise in dem gesamten Wellenlängenbereich von 440 nm bis 420 nm, bevorzugt von 440 nm bis 450 nm, besonders bevorzugt von 440 nm bis 500 nm, verwendet wird.

15. Verwendung nach Anspruch 13 oder 14,
**dadurch gekennzeichnet, dass**
ein Puzzolan vulkanischen Ursprungs mit den Merkmalen der Ansprüche 3 bis 6 verwendet wird.

16. Verfahren zur Herstellung einer Weißzementmischung nach einem der Ansprüche 1 bis 12,
**dadurch gekennzeichnet, dass**
die Weißzementmischung durch Mischen der einzelnen Zementmischungsbestandteile miteinander hergestellt wird, wobei vorzugweise der Weißzementklinker vor dem Vermischen mit den anderen Zementmischungsbestandteilen mit dem zumindest einen Erstarrungsregler und dem zumindest einen reflektierenden Puzzolan vulkanischen Ursprungs gemeinsam vermahlen wird.

17. Erhärtete, hydratisierte Weißzementmischung, hergestellt aus einer wässrigen Zementleimmischung aufweisend die Weißzementmischung gemäß einem der Ansprüche 1 bis 12 und/oder hergestellt gemäß Anspruch 16 und Wasser.

18. Trockenmörtelmischung, aufweisend eine Weißzementmischung gemäß einem der Ansprüche 1 bis 12 und/oder hergestellt gemäß Anspruch 16 sowie zumindest einen Zuschlagstoff.

19. Frischmörtelmasse aufweisend eine Trockenmörtelmischung gemäß Anspruch 18 und Wasser.

20. Trockenbetonmischung, aufweisend eine Weißzementmischung gemäß einem der Ansprüche 1 bis 12 und/oder hergestellt gemäß Anspruch 16 sowie zumindest einen Zuschlagstoff.

21. Frischbetonmasse aufweisend eine Trockenbetonmischung gemäß Anspruch 20 und Wasser.

## Claims

1. Dry, hydraulically hardening, white cement mixture, comprising 95-100 ma.-% of main constituents and 0-5 ma.-% of secondary constituents, respectively based on the sum of main and secondary constituents, and, in addition to the main and secondary constituents, at least one setting regulator, wherein the cement mixture comprises as main constituent
a) white cement clinker, preferably in an amount of 45 to 95 ma.-%, more preferably 50 to 85 ma.-%, particularly preferably 65 to 80 ma.-%, based on the sum of the main and secondary constituents,
and
b) at least one pozzolan of volcanic origin,
**characterized in that**
the at least one pozzolan of volcanic origin comprises a reflectance of 55 to 75 %, preferably 60 to 70 %, at a wavelength of 440 nm, determined using a sphere spectrophotometer with a UV LED light source and D/8° measuring geometry,
and the white cement mixture comprises a total amount of reflective pozzolan of volcanic origin of 5 to 55 ma.-%, preferably 15 to 50 ma.-%, particularly preferably 20 to 35 ma.-%, based on the sum of the main and secondary constituents.

2. White cement mixture according to claim 1,
**characterized in that**
the white cement mixture comprises
a) a Ca(OH)₂ content of 0.1 to 5.0 ma.-%, preferably 0.1 to 4.0 ma.-%, more preferably 0.2 to 3.5 ma.-%, particularly preferably 0.3 to 3.0 ma.-%, determined by X-ray diffraction and evaluation by Rietveld without internal standard,
and
b) an SO₃ content of 2.0 to 4.0 ma.-%, preferably 2.5 to 3.0 ma.-%, determined by chemical X-ray fluorescence analysis according to DIN EN 196-2:2013-10.

3. White cement mixture according to one of the preceding claims,
**characterized in that**
the at least one reflective pozzolan of volcanic origin is a natural pozzolan (P) according to DIN 197-1:2011-11 and preferably consists of volcanic igneous rock, in particular a volcanic rock glass, preferably pumice or, in particular zeolitic, tuff or perlite.

4. White cement mixture according to one of the preceding claims,
**characterized in that**
a) the at least one reflective pozzolan of volcanic origin comprises a reflectance of 60 to 85 %, preferably 65 to 80 %, at a wavelength of 580 nm, determined using a sphere spectrophotometer with a UV LED light source and D/8° measuring geometry,
and/or
b) the at least one reflective pozzolan of volcanic origin comprises a degree of lightness L* of 80 to 95, preferably 85 to 92, determined in accordance with DIN EN ISO/CIE 11664-4:2020-03.
and/or
c) the at least one reflective pozzolan of volcanic origin comprises a color value b* of 2.0 to 6.0, preferably 3.0 to 5.5, determined according to DIN EN ISO/CIE 11664-4:2020-03.

5. White cement mixture according to one of the preceding claims,
**characterized in that**
a) the at least one reflective pozzolan of volcanic origin comprises an amorphous content of 80 to 99 ma.-%, preferably 85 to 90 ma.-%, determined by X-ray diffraction and evaluation by Rietveld without internal standard and PONKCS,
and/or
b) the at least one reflective pozzolan of volcanic origin comprises an SiO₂ content of 65 to 90 ma.-%, preferably 75 to 80 ma.-%, determined by chemical X-ray fluorescence analysis according to DIN EN 196-2:2013-10,
and/or
c) the at least one reflective pozzolan of volcanic origin comprises a reactive silica content > 25 ma.-%, determined by pozzolanicity testing according to DIN EN 196-5:2011-06,
and/or
d) the at least one reflective pozzolan of volcanic origin comprises an Fe₂O₃ content of 0 to 3.0 ma.-%, preferably 0 to 1.5 ma.-%, particularly preferably 0.5 to 1.5 ma.-%, determined by chemical X-ray fluorescence analysis according to DIN EN 196-2:2013-10,
and/or
e) the at least one reflective pozzolan of volcanic origin comprises an Al₂O₃ content of 10.0 to 15.0 ma.-%, preferably 11 to 13.5 ma.-%, preferably 12.0 to 13.5 ma.-%, determined by chemical X-ray fluorescence analysis according to DIN EN 196-2:2013-10.

6. White cement mixture according to one of the preceding claims,
**characterized in that**
a) the at least one reflective pozzolan of volcanic origin comprises a Blaine value of 4000 to 8000 cm²/g, preferably 5000 to 7000 cm²/g, determined according to DIN EN 196-6:2019-03,
and/or
b) the sum of white cement clinker and reflective pozzolan of volcanic origin in the white cement mixture is at least 60 ma.-%, preferably at least 80 ma.-%, particularly preferably at least 85 ma.-%, very particularly preferably at least 95 ma.-%, especially 100 ma.-%, based on the sum of the main and secondary constituents,
and/or
c) the white cement mixture comprises limestone powder and/or precipitated calcium carbonate (PCC) and/or another pozzolan, in particular a natural tempered pozzolan, preferably calcined clay, and/or silica fume, as a further main constituent or secondary constituent.

7. White cement mixture according to one of the preceding claims,
**characterized in that**
a) the white cement mixture comprises a degree of whiteness L* of 88 to 99, preferably 90 to 95, determined in accordance with DIN EN ISO/CIE 11664-4:2020-03,
and/or
b) the white cement mixture comprises a color value b* of 2.0 to 5.0, preferably 2.5 to 4.5, determined in accordance with DIN EN ISO/CIE 11664-4:2020-03,
and/or
c) the white cement mixture comprises a reflectance of 75 to 90 %, preferably 80 to 85 %, at a wavelength of 440 nm, determined using a sphere spectrophotometer with a UV LED light source and D/8° measuring geometry, and/or a reflectance of 80 to 95 %, preferably 85 to 90 %, at a wavelength of 580 nm, determined using a sphere spectrophotometer with a UV LED light source and D/8° measuring geometry.

8. White cement mixture according to one of the preceding claims,
**characterized in that**
a) the hardened, hydrated white cement mixture comprises a reflectance of 70 to 85 %, preferably 75 to 80 %, at a wavelength of 440 nm, determined using a sphere spectrophotometer with a UV LED light source and D/8° measuring geometry,
and/or
b) the reflection of the hardened white cement mixture at a wavelength of 440 nm is higher than the reflection of the hardened white cement contained in the white cement mixture, determined using a sphere spectrophotometer with a UV LED light source and D/8° measuring geometry,
and/or
c) the reflectance of the hardened white cement mixture in the wavelength range from 440 nm to 420 nm, preferably from 440 nm to 450 nm, particularly preferably from 440 nm to 500 nm, is higher than the reflectance of the hardened white cement contained in the white cement mixture, determined using a sphere spectrophotometer with a UV LED light source and D/8° measuring geometry,
and/or
d) the hardened white cement mixture comprises a degree of lightness L* of 90.0 to 95.0, preferably 91.0 to 93.5, determined in accordance with DIN EN ISO/CIE 11664-4:2020-03,
and/or
e) the hardened white cement mixture comprises a color value b* of 2.5 to 5.0, preferably 3.3 to 4.0, determined in accordance with DIN EN ISO/CIE 11664-4:2020-03.

9. White cement mixture according to one of the preceding claims,
**characterized in that**
a) the white cement mixture consists of at least 95 ma.-%, preferably of 98 ma.-%, particularly preferably of 100 ma.-% of the main and secondary constituents and setting regulator.
and/or
b) the white cement mixture comprises a Blaine value of 3500 to 7000 cm²/g, preferably 4500 to 6000 cm²/g, determined in accordance with DIN EN 196-6:2019-03,
and/or
c) the white cement mixture is a standard cement according to DIN 197-1:2011-11 or DIN 197-5:2021-07, preferably a CEM II or a CEM IV, preferably a CEM IV/A-P.

10. White cement mixture according to one of the preceding claims,
**characterized in that**
a) the white cement clinker comprises a C₃A content of 5 to 20 ma.-%, preferably 8 to 18 ma.-%, particularly preferably 10 to 15 ma.-%, determined by X-ray diffraction and evaluation by Rietveld without internal standard and PONKCS,
and/or
b) the amount of amorphous C₃A in the white cement mixture, based on the total amount of C₃A, is at least 30 ma.-%, in particular 30 to 90 ma.-%,
and/or
c) the white cement mixture comprises an amorphous C₃A content of 5 to 16 ma.-%, preferably 7 to 15 ma.-%, particularly preferably 8 to 14 ma.-%, determined by X-ray diffraction and evaluation by Rietveld without internal standard and PONKCS,
and/or
d) the white cement mixture has a crystalline C₃A content of 1 to 6 ma.-%, preferably 1.5 to 5 ma.-%, particularly preferably 2 to 4 ma.-%, determined by X-ray diffraction and evaluation by Rietveld without internal standard.

11. White cement mixture according to one of the preceding claims,
**characterized in that**
a) the white cement clinker comprises a C₂S content of 10 to 30 ma.-%, preferably 12 to 22 ma.-%, determined by X-ray diffraction and evaluation by Rietveld without internal standard,
and/or
b) the white cement clinker comprises a C₃S content of 50 to 70 ma.-%, preferably 55 to 65 ma.-%, determined by X-ray diffraction and evaluation by Rietveld without internal standard,
and/or
c) the white cement mixture comprises an Fe₂O₃ content of 0 to 1.0 ma.-%, preferably 0 to 0.6 ma.-%, particularly preferably 0.2 to 0.6 ma.-%, determined by means of chemical X-ray fluorescence analysis in accordance with DIN EN 196-2:2013-10.

12. White cement mixture according to one of the preceding claims,
**characterized in that**
the at least one setting regulator is a CaSO₄-containing setting regulator, preferably gypsum or hemihydrate or anhydrite.

13. Use of a pozzolan of volcanic origin which comprises a reflection of 55 to 75%, preferably 60 to 70%, at a wavelength of 440 nm in a dry, hydraulically hardening white cement mixture comprising white cement clinker and at least one setting regulator, in particular in a white cement mixture according to one of the preceding claims.

14. Use according to claim 13,
**characterized in that**
the pozzolan of volcanic origin is used in the white cement mixture to increase the reflectance of the hardened white cement mixture produced from the white cement mixture at a wavelength of 440 nm, preferably in the entire wavelength range from 440 nm to 420 nm, preferably from 440 nm to 450 nm, particularly preferably from 440 nm to 500 nm.

15. Use according to claim 13 or 14 ,
**characterized in that**
a pozzolan of volcanic origin having the features of claims 3 to 6 is used.

16. Process for preparing a white cement mixture according to one of claims 1 to 12,
**characterized in that**
the white cement mixture is produced by mixing the individual cement mixture constituents with one another, wherein preferably the white cement clinker is ground together with the at least one setting regulator and the at least one reflective pozzolan of volcanic origin prior to mixing with the other cement mixture constituents.

17. A hardened, hydrated white cement mixture prepared from an aqueous cement paste mixture comprising the white cement mixture according to one of claims 1 to 12 and/or prepared according to claim 16 and water.

18. A dry mortar mixture comprising a white cement mixture according to one of claims 1 to 12 and/or prepared according to claim 16 and at least one aggregate.

19. Fresh mortar mass comprising a dry mortar mixture according to claim 18 and water.

20. A dry concrete mixture comprising a white cement mixture according to one of claims 1 to 12 and/or prepared according to claim 16 and at least one aggregate.

21. Fresh concrete mass comprising a dry concrete mixture according to claim 20 and water.

## Revendications

1. Mélange de ciment blanc sec, durcissant hydrauliquement, présentant 95 à 100 % en masse de constituants principaux et 0 à 5 % en masse de constituants secondaires, respectivement par rapport à la somme des constituants principaux et secondaires, ainsi que, en plus des constituants principaux et secondaires, au moins un régulateur de prise, où le mélange de ciment présente comme constituant principal
a) clinker de ciment blanc, de préférence en une quantité de 45 à 95 % en masse, de préférence de 50 à 85 % en masse, de manière particulièrement préférée de 65 à 80 % en masse, par rapport à la somme des constituants principaux et secondaires,
et
b) au moins une pouzzolane d'origine volcanique,
**caractérisé en ce que**
ladite au moins une pouzzolane d'origine volcanique présente, à une longueur d'onde de 440 nm, une réflectance de 55 à 75 %, de préférence de 60 à 70 %, déterminée à l'aide d'un spectrophotomètre sphérique avec une source de lumière LED UV et une géométrie de mesure D/8°, et que le mélange de ciment blanc présente une quantité totale de pouzzolane réfléchissante d'origine volcanique de 5 à 55 % en masse, de préférence de 15 à 50 % en masse, de manière particulièrement préférée de 20 à 35 % en masse, par rapport à la somme des constituants principaux et secondaires.

2. Mélange de ciment blanc selon la revendication 1,
**caractérisé en ce que**
le mélange de ciment blanc présente
a) une teneur en Ca(OH)₂ de 0,1 à 5,0 % en masse, de préférence de 0,1 à 4,0 % en masse, de préférence de 0,2 à 3,5 % en masse, de manière particulièrement préférée de 0,3 à 3,0 % en masse, déterminée par diffractométrie aux rayons X et évaluation par Rietveld sans standard interne,
et
b) une teneur en SO₃ de 2,0 à 4,0 % en masse, de préférence de 2,5 à 3,0 % en masse, déterminée par analyse chimique par fluorescence X selon la norme DIN EN 196-2:2013-10.

3. Mélange de ciment blanc selon l'une quelconque des revendications précédentes,
**caractérisé en ce que**
la au moins une pouzzolane réfléchissante d'origine volcanique est une pouzzolane naturelle (P) selon la norme DIN 197-1:2011-11 et se compose de préférence de roche éruptive volcanique, en particulier d'un verre de roche volcanique, de préférence de pierre ponce ou de, en particulier zéolithique, tuf ou de perlite.

4. Mélange de ciment blanc selon l'une quelconque des revendications précédentes,
**caractérisé en ce que**
a) ladite au moins une pouzzolane réfléchissante d'origine volcanique présente, à une longueur d'onde de 580 nm, une réflectance de 60 à 85 %, de préférence de 65 à 80 %, déterminée à l'aide d'un spectrophotomètre sphérique avec une source de lumière LED UV et une géométrie de mesure D/8°,
et/ou
b) la au moins une pouzzolane réfléchissante d'origine volcanique présente un degré de luminosité L* de 80 à 95, de préférence de 85 à 92, déterminé selon DIN EN ISO/CIE 11664-4:2020-03.
et/ou
c) ladite au moins une pouzzolane réfléchissante d'origine volcanique présente un indice de couleur b* de 2,0 à 6,0, de préférence de 3,0 à 5,5, déterminé selon la norme DIN EN ISO/CIE 11664-4:2020-03.

5. Mélange de ciment blanc selon l'une quelconque des revendications précédentes,
**caractérisé en ce que**
a) la au moins une pouzzolane réfléchissante d'origine volcanique présente une proportion amorphe de 80 à 99 % en masse, de préférence de 85 à 90 % en masse, déterminée par diffraction des rayons X et évaluation par Rietveld sans standard interne et PONKCS,
et/ou
b) la au moins une pouzzolane réfléchissante d'origine volcanique présente une teneur en SiO₂ de 65 à 90 % en masse, de préférence de 75 à 80 % en masse, déterminée au moyen d'une analyse chimique par fluorescence X selon DIN EN 196-2:2013-10,
et/ou
c) la au moins une pouzzolane réfléchissante d'origine volcanique présente une teneur en silice réactive > 25 % en masse, déterminée au moyen d'un test de pouzzolanicité selon DIN EN 196-5:2011-06,
et/ou
d) la au moins une pouzzolane réfléchissante d'origine volcanique présente une teneur en Fe₂O₃ de 0 à 3,0 % en masse, de préférence de 0 à 1,5 % en masse, de manière particulièrement préférée de 0,5 à 1,5 % en masse, déterminée par analyse chimique par fluorescence X selon DIN EN 196-2:2013-10,
et/ou
e) la au moins une pouzzolane réfléchissante d'origine volcanique présente une teneur en Al)O₃ de 10,0 à 15,0 % en masse, de préférence de 11 à 13,5 % en masse, de préférence de 12,0 à 13,5 % en masse, déterminée par analyse chimique par fluorescence X selon DIN EN 196-2:2013-10.

6. Mélange de ciment blanc selon l'une quelconque des revendications précédentes,
**caractérisé en ce que**
a) la au moins une pouzzolane réfléchissante d'origine volcanique présente une valeur Blaine de 4000 à 8000 cm²/g, de préférence de 5000 à 7000 cm²/g, déterminée selon DIN EN 196-6:2019-03,
et/ou
b) la somme du clinker de ciment blanc et de la pouzzolane réfléchissante d'origine volcanique dans le mélange de ciment blanc est d'au moins 60 % en masse, de préférence d'au moins 80 % en masse, de manière particulièrement préférée d'au moins 85 % en masse, de manière tout à fait préférée d'au moins 95 % en masse, en particulier de 100 % en masse, par rapport à la somme des constituants principaux et secondaires,
et/ou
c) le mélange de ciment blanc comprend de la farine de calcaire et/ou du carbonate de calcium précipité (PCC) et/ou une autre pouzzolane, en particulier une pouzzolane naturelle recuite, de préférence de l'argile calcinée, et/ou de la poussière de silice, comme autre constituant principal ou constituant secondaire.

7. Mélange de ciment blanc selon l'une quelconque des revendications précédentes,
**caractérisé en ce que**
a) le mélange de ciment blanc présente un degré de blancheur L* de 88 à 99, de préférence de 90 à 95, déterminé selon DIN EN ISO/CIE 11664-4:2020-03,
et/ou
b) le mélange de ciment blanc présente un indice de couleur b* de 2,0 à 5,0, de préférence de 2,5 à 4,5, déterminé selon la norme DIN EN ISO/CIE 11664-4:2020-03,
et/ou
c) le mélange de ciment blanc présente, à une longueur d'onde de 440 nm, une réflexion de 75 à 90 %, de préférence de 80 à 85 %, déterminée avec un spectrophotomètre sphérique avec une source de lumière LED UV et une géométrie de mesure D/8°, et/ou à une longueur d'onde de 580 nm, une réflexion de 80 à 95 %, de préférence de 85 à 90 %, déterminée avec un spectrophotomètre sphérique avec une source de lumière LED UV et une géométrie de mesure D/8°.

8. Mélange de ciment blanc selon l'une quelconque des revendications précédentes,
**caractérisé en ce que**
a) le mélange de ciment blanc hydraté durci présente, à une longueur d'onde de 440 nm, une réflectance de 70 à 85 %, de préférence de 75 à 80 %, déterminée à l'aide d'un spectrophotomètre sphérique avec une source de lumière LED UV et une géométrie de mesure D/8°,
et/ou
b) la réflectance du mélange de ciment blanc durci à une longueur d'onde de 440 nm est supérieure à la réflectance du ciment blanc durci contenu dans le mélange de ciment blanc, déterminée à l'aide d'un spectrophotomètre sphérique avec une source de lumière LED UV et une géométrie de mesure D/8°,
et/ou
c) la réflexion du mélange de ciment blanc durci dans le domaine de longueurs d'onde de 440 nm à 420 nm, de préférence de 440 nm à 450 nm, de manière particulièrement préférée de 440 nm à 500 nm, est supérieure à la réflexion du ciment blanc durci contenu dans le mélange de ciment blanc, déterminée à l'aide d'un spectrophotomètre sphérique avec une source de lumière UV-LED et une géométrie de mesure D/8°,
et/ou
d) le mélange de ciment blanc durci présente un degré de luminosité L* de 90,0 à 95,0, de préférence de 91,0 à 93,5, déterminé selon DIN EN ISO/CIE 11664-4:2020-03,
et/ou
e) le mélange de ciment blanc durci présente un indice de couleur b* de 2,5 à 5,0, de préférence de 3,3 à 4,0, déterminé selon DIN EN ISO/CIE 11664-4:2020-03.

9. Mélange de ciment blanc selon l'une quelconque des revendications précédentes,
**caractérisé en ce que**
a) le mélange de ciment blanc est constitué d'au moins 95 % en masse, de préférence de 98 % en masse, de manière particulièrement préférée de 100 % en masse des constituants principaux et secondaires et de régulateur de prise.
et/ou
b) le mélange de ciment blanc présente une valeur Blaine de 3500 à 7000 cm²/g, de préférence de 4500 à 6000 cm²/g, déterminée selon DIN EN 196-6:2019-03,
et/ou
c) le mélange de ciment blanc est un ciment normal selon la norme DIN 197-1:2011-11 ou DIN 197-5:2021-07, de préférence un CEM II ou un CEM IV, de préférence un CEM IV/A-P.

10. Mélange de ciment blanc selon l'une quelconque des revendications précédentes,
**caractérisé en ce que**
a) le clinker de ciment blanc présente une teneur en C₃A de 5 à 20 % en masse, de préférence de 8 à 18 % en masse, de manière particulièrement préférée de 10 à 15 % en masse, déterminée par diffraction des rayons X et évaluation au moyen de Rietveld sans standard interne et PONKCS,
et/ou
b) la proportion de C₃A amorphe dans le mélange de ciment blanc, par rapport à la quantité totale de C₃A, est d'au moins 30 % en masse, en particulier de 30 à 90 % en masse,
et/ou
c) le mélange de ciment blanc présente une teneur en C₃A amorphe de 5 à 16 % en masse, de préférence de 7 à 15 % en masse, de manière particulièrement préférée de 8 à 14 % en masse, déterminée par diffraction des rayons X et évaluation par Rietveld sans standard interne et PONKCS,
et/ou
d) le mélange de ciment blanc présente une teneur en C₃A cristallin de 1 à 6 % en masse, de préférence de 1,5 à 5 % en masse, de manière particulièrement préférée de 2 à 4 % en masse, déterminée par diffractométrie aux rayons X et évaluation au moyen de Rietveld sans standard interne.

11. Mélange de ciment blanc selon l'une quelconque des revendications précédentes,
**caractérisé en ce que**
a) le clinker de ciment blanc présente une teneur en C₂S de 10 à 30 % en masse, de préférence de 12 à 22 % en masse, déterminée par diffractométrie aux rayons X et évaluation au moyen de Rietveld sans standard interne,
et/ou
b) le clinker de ciment blanc présente une teneur en C₃S de 50 à 70 % en masse, de préférence de 55 à 65 % en masse, déterminée par diffractométrie aux rayons X et évaluation au moyen de Rietveld sans standard interne,
et/ou
c) le mélange de ciment blanc présente une teneur en Fe₂O₃ de 0 à 1,0 % en masse, de préférence de 0 à 0,6 % en masse, de manière particulièrement préférée de 0,2 à 0,6 % en masse, déterminée par analyse chimique par fluorescence X selon DIN EN 196-2:2013-10.

12. Mélange de ciment blanc selon l'une quelconque des revendications précédentes,
**caractérisé en ce que**
ledit au moins un régulateur de prise est un régulateur de prise contenant du CaSO₄, de préférence du gypse ou du semi-hydrate ou de l'anhydrite.

13. Utilisation d'une pouzzolane d'origine volcanique présentant une réflectance de 55 à 75 %, de préférence de 60 à 70 %, à une longueur d'onde de 440 nm, dans un mélange de ciment blanc sec, durcissant hydrauliquement, comprenant du clinker de ciment blanc et au moins un régulateur de prise, notamment dans un mélange de ciment blanc selon l'une quelconque des revendications précédentes.

14. Utilisation selon la revendication 13,
**caractérisé en ce que**
la pouzzolane d'origine volcanique est utilisée dans le mélange de ciment blanc pour augmenter la réflectance du mélange de ciment blanc durci préparé à partir du mélange de ciment blanc à une longueur d'onde de 440 nm, de préférence dans tout le domaine de longueurs d'onde de 440 nm à 420 nm, de préférence de 440 nm à 450 nm, de manière particulièrement préférée de 440 nm à 500 nm.

15. Utilisation selon la revendication 13 ou14,
**caractérisé en ce que**
une pouzzolane d'origine volcanique ayant les caractéristiques des revendications 3 à 6 est utilisée.

16. Procédé de préparation d'un mélange de ciment blanc selon l'une quelconque des revendications 1 à 12,
**caractérisé en ce que**
le mélange de ciment blanc est préparé en mélangeant les différents constituants du mélange de ciment entre eux, où, de préférence, le clinker de ciment blanc est broyé conjointement avec ledit au moins un régulateur de prise et ladite au moins une pouzzolane réfléchissante d'origine volcanique avant d'être mélangé avec les autres constituants du mélange de ciment.

17. Mélange de ciment blanc hydraté, durci, préparé à partir d'un mélange aqueux de pâte de ciment comprenant le mélange de ciment blanc selon l'une quelconque des revendications 1 à 12 et/ou préparé selon la revendication 16 et de l'eau.

18. Mélange de mortier sec, présentant un mélange de ciment blanc selon l'une des revendications 1 à 12 et/ou préparé selon la revendication 16 ainsi qu'au moins un agrégat.

19. Masse de mortier frais comprenant un mélange de mortier sec selon la revendication 18 et de l'eau.

20. Mélange de béton sec comprenant un mélange de ciment blanc selon l'une des revendications 1 à 12 et/ou préparé selon la revendication 16 ainsi qu'au moins un agrégat.

21. Masse de béton frais comprenant un mélange de béton sec selon la revendication 20 et de l'eau.
